Europäisches Patentamt

European Patent Office

Office européen des brevets

Publication number: **0 287 157**
**A2**

## EUROPEAN PATENT APPLICATION

Application number: 88200657.0

Int. Cl.⁴ **A23L 1/01 , A23D 5/00**

Date of filing: 07.04.88

Priority: 15.04.87 US 38400
05.05.87 US 46217

Date of publication of application:
19.10.88 Bulletin 88/42

Designated Contracting States:
AT BE CH DE ES FR GB GR IT LI LU NL SE

Applicant: THE PROCTER & GAMBLE
COMPANY
One Procter & Gamble Plaza
Cincinnati Ohio 45202(US)

Inventor: Baginski, John Robert
6392 Roth Ridge Drive
Loveland, OH 45140(US)
Inventor: Weisgerber, David John
2632 Fairhill Drive
Cincinnati, OH 45239(US)

Representative: Ernst, Hubert et al
PROCTER & GAMBLE EUROPEAN
TECHNICAL CENTER N.V. Temselaan 100
B-1820 Strombeek-Bever(BE)

Sugar polyester frying mediums with improved frylife and foods fried in the frying mediums.

The invention encompasses a method of frying foods in frying mediums having improved heat stability and improved frylife, as well as the fried fat-containing food compositions. The frying mediums comprise from about 35% to about 100% sugar polyesters and from about 0% to about 65% other frying medium ingredients, where not less than about 70% of the sugar polyesters are completely esterified. The invention also relates to food compositions that are fried in the present frying mediums.

EP 0 287 157 A2

# SUGAR POLYESTER FRYING MEDIUMS WITH IMPROVED FRYLIFE AND FOODS FRIED IN THE FRYING MEDIUMS

## Field of the Invention

The present invention relates to a method of frying foods in frying mediums that are specially synthesized to provide improved frylife. The invention also relates to the fried food compositions.

## Background of the Invention

Deep frying is a process of cooking involving the direct transfer of heat from the frying medium to cold food. Most restaurants serve foods such as chicken, fish, french fries and onion rings which are deep-fried in edible cooking fats or oils. During these frying operations fat or oil (frying medium) is heated in 15-60 lb. kettles to temperatures of approximately 350°F to 375°F (175°C to 190°C), and food is immersed in the hot frying medium and fried for varying lengths of time. The frying medium is reused as subsequent batches of food are cooked. It is thus maintained at high deep-frying temperatures for prolonged periods, often for days.

Browning or caramelization of the surface of the food takes place during cooking. The food absorbs frying medium during the cooking process, usually about 4-30% by weight of the fried food, depending on type of food, cooking time and temperature. This frying medium adds a desirable texture to the food and provides a satisfying eating quality and flavor.

The deep frying process also causes undesirable chemical changes to occur in the frying medium. The most important changes are hydrolysis, oxidation, and polymerization which lead to color darkening and generation of off-flavors. To extend the useful life (frylife) of a frying medium it is especially important to lessen the extent of hydrolysis. Hydrolysis splits the frying medium into the base structure and free fatty acids. These free fatty acids cause progressive acidification of the frying medium solution, a condition conducive to an increased rate of hydrolysis and increased color darkening. Frying medium used in the normal course of business in restaurants and fast food outlets becomes unusable within approximately three to seven days because of these undesirable chemical and physical changes which cause unacceptable visual darkening of the foods fried in them.

A number of references disclose shortenings and oils made with polyol polyesters. For example, U. S. Patent 3,600,186 of Mattson et al., issued August 17, 1981, discloses low calorie fat-containing food compositions wherein from about 10% to about 100% of the total fat is a sugar or sugar alcohol fatty acid ester having at least 4 fatty acid ester groups, with each fatty acid having from about 8 to about 22 carbon atoms. The esters are said to be useful as a partial or complete replacement for normal triglyceride fat in salad or cooking oils; or plastic shortenings for use in frying, cake making, bread making, or the like. A plastic shortening is disclosed made with 50% sucrose octastearate.

U.S. Patent 4,034,083 of Mattson, issued July 5, 1977, discloses polyol fatty acid polyesters having at least four fatty acid ester groups that are fortified with fat-soluble vitamins and used in food or pharmaceutical compositions for treating and/or preventing hypercholesterolemia. Cooking oils and plastic shortenings are specifically mentioned.

In U. S. Patents 4,005,195 and 4,005,196 of Jandacek et al., issued January 25, 1977, polyol polyesters such as sucrose polyesters are used in combination with fat-soluble vitamins and anti-anal leakage agents to provide food and pharmaceutical compositions for treating and/or preventing hypercholesterolemia. The patents contain claims for food compositions in which the polyol polyesters and anti-anal leakage agents comprise 10% to 100% of the total fat ingredients.

It is an object of the present invention to provide a method of frying foods in frying mediums that can be heated for extended periods of time without degrading.

It is another object of the present invention to make these frying mediums from sugar polyesters that are specially synthesized to improve heat stability and extend frylife.

It is a further object of the present invention to provide food compositions that are fried in the frying mediums.

These and other objects of the invention will become evident from the disclosure herein.

All percentages are by weight unless otherwise defined.

## Summary of the Invention

The invention encompasses a method of frying foods in frying mediums having improved heat stability and improved frylife, as well as the fried fat-containing food compositions. The frying mediums comprise from about 35% to about 100% sugar fatty acid esters and from about 0% to about 65% other frying medium ingredients; where not less than about 70% of the sugar esters are completely esterified. The invention also relates to food compositions that are fried in the present frying mediums.

## Detailed Description of the Invention

### A. Method for Making Frying Mediums with Improved Frylife

Tests to measure the frying performance of frying mediums containing sucrose polyesters were conducted at typical foodservice fryline conditions, using a mixed menu of par-fried potatoes, chicken, onion rings and fish. Surprisingly, frying mediums containing sucrose polyesters having an octaester level not less than about 70% were found to have significantly longer frylife than frying mediums containing sucrose polyesters having lower octaester content. In particular, frying mediums made of only sucrose polyester, composed of not less than about 70% octaester, have a frylife significantly greater than 7 days (projected to be about 14 days) versus a frylife of only about 3 days for a sucrose polyester frying medium composed of less than about 70% octaester. These sucrose polyesters, although different in level of esterification, have similar fatty acid compositions.

Frying medium blends composed of sucrose polyester, containing not less than about 70% octaester, and other frying medium components, such as triglycerides, were also found, as a blend, to have significantly improved frylife versus frying medium blends made from sucrose polyester with an octaester level less than about 70%. In the case of the blends the frylife improvement is less than the frying mediums composed of only sucrose polyester. This is thought to be at least partially due to the dilution of the frying medium with less thermally stable triglycerides. A frylife improvement of about 1-2 days, improving from about 6 days to about 7.5 days, was found for blends composed of not less than about 70% octaester sucrose polyester versus blends made from sucrose polyesters containing less than about 70% octaester.

These frying medium frylife observations are based on: 1) visual observation of the color of the frying mediums, 2) spectrophotometric measurements of the frying medium, and 3) visual observation of the color of the foods fried in the frying mediums.

While not intending to be limited by theory, this frylife difference between higher and lower octaester sucrose polyesters is thought to be due to the greater reactivity of lower ester (non-octaester) sucrose polyesters due to their higher hydroxyl group content. Hydrolysis is believed to occur due to the presence of one or more chemically reactive hydroxyl sites on the sucrose polyester molecule. In addition, the cleavage of fatty acids from the sucrose backbone progressively acidifies the frying medium, resulting in an autocatalytic increase in driving force for further hydrolysis. Thus, sucrose polyesters with initially higher octaester levels, and thereby minimized hydroxyl sites, will be more stable during heating than will lower octaester sucrose polyesters with more hydroxyl sites. Higher octaester level sucrose polyesters therefore retard at least the rate of hydrolysis of the sucrose polyesters and extend the useful frylife of a frying medium containing the sucrose polyesters.

It was also experimentally found that these higher octaester level sucrose polyesters, when blended with other frying medium components such as triglycerides, shift to a different endpoint ester distribution when heated over time than do lower octaester level sucrose polyesters. Specifically, the sucrose polyesters with an octaester level less than about 70% shift to a distribution of about 55% octa-and about 45% lower esters while the sucrose polyesters with an octaester level less than about 70% shift to a distribution of about 41% octa-and about 59% lower esters, for a frying time of about 84 hours.

The present discovery is not limited to sucrose polyesters, but will also apply to other sugar fatty acid esters ("sugar polyesters") having at least four hydroxyl groups. Not less than about 70% of the sugar polyesters must be completely esterified to provide the frylife benefits of the present invention. Incompletely esterified sugar polyesters are thought to be more reactive and more subject to degradation from prolonged heating.

The present invention makes use of this new discovery to provide a method of frying foods in sugar polyester-containing frying mediums that have excellent frylife and frying stability. The method can be used for all food frying applications: commercial frying, retail, foodservice, deep frying, pan frying, par frying, etc., and for all types of foods, including fish, meat, potatoes and other vegetables. This development allows an increase in frying medium frylife without a reduction in quality (color or taste) of the fried foods.

The method of frying foods comprises immersing said foods in a frying medium comprising: (a) from about 35% to about 100% sugar fatty acid esters having at least four fatty acid ester groups, wherein the sugar contains 4 to 8 hydroxyl groups and wherein each fatty acid group has from about eight to about 22 carbon atoms, and wherein not less than about 70% of the sugar fatty acid esters are completely esterified; and (b) from about 0% to about 65% other frying medium ingredients. Preferably more than about 75% of the sugar fatty acid esters are completely esterified, and most preferably more than about 80%.

Preferably, the present frying medium comprises from about 50% to about 100% sugar fatty acid esters and from about 0% to about 50% other frying medium ingredients, more preferably from about 75% to about 100% sugar fatty acid esters and from about 0% to about 25% other ingredients, and most preferably the frying medium comprises about 100% of the sugar fatty acid esters. The other frying medium ingredients are described in more detail below; they preferably comprise glyceride fats and/or oils.

The present frying mediums can be made with a blend of different ester level sugar polyesters. Part of the sugar polyesters used to make the blend can be less than about 70% completely esterified, as long as the blend as a whole is not less than about 70% completely esterified.

It would be expected that changes in the fatty acid composition of the sugar polyester would affect the ability of the ester moieties to resist hydrolysis. This would include changes in chain length, degree of saturation, cis versus trans level, etc. However, when comparing sugar polyesters of similar fatty acid composition, sugar polyesters not less than about 70% completely esterified would be expected to have greater resistance to hydrolysis and greater frylife and frying stability than sugar polyesters that are less than about 70% completely esterified.

## B. The Sugar Polyesters

The sugar polyesters of the present invention are sugar fatty acid esters esterified with at least four fatty acid groups. The term "sugar" is used herein in its conventional sense as generic to mono-, di-, and trisaccharides. The fatty acid ester compounds are prepared by reacting a monosaccharide, disaccharide or trisaccharide with fatty acid as discussed below.

Examples of suitable monosaccharides are those containing 4 hydroxyl groups such as xylose, arabinose, and ribose. The monosaccharide erythrose is not suitable for the practice of this invention since it only contains 3 hydroxyl groups. Among 5 hydroxyl containing monosaccharides that are suitable for use herein are glucose, mannose, galactose, fructose, and sorbose. Examples of suitable disaccharides are maltose, lactose, and sucrose, all of which contain 8 hydroxyl groups. Examples of suitable trisaccharides are maltotriose and raffinose. A preferred sugar for preparing the polyesters for use in the present invention is sucrose.

The sugar polyester starting material having at least four hydroxyl groups must be esterified on at least four of the -OH groups with a fatty acid containing from about 8 to about 22 carbon atoms, and preferably from about 14 to about 18 carbon atoms. Examples of such fatty acids include caprylic, capric, lauric, myristic, myristoleic, palmitic, palmitoleic, stearic, oleic, ricinoleic, linoleic, linolenic, eleostearic, arachidic, arachidonic, behenic, and erucic acid. The fatty acids can be derived from naturally occurring or synthetic fatty acids; they can be saturated or unsaturated, including positional and geometrical isomers.

The sugar fatty acid esters useful in this invention must contain at least four fatty acid ester groups. Sugar fatty acid ester compounds that contain three or less fatty acid ester groups are digested in and the products of digestion are absorbed from the intestinal tract much in the manner of ordinary triglyceride fats, whereas sugar fatty acid ester compounds that contain four or more fatty acid ester groups are substantially non-digestible and consequently non-absorbable by the human body. It is not necessary that all of the hydroxyl groups of the sugar be esterified with fatty acid, but it is preferable that the polyester contain no more than two unesterified hydroxyl groups. Most preferably, substantially of the hydroxyl groups of the sugar are esterified with fatty acid, i.e., the compound is substantially completely esterified. The fatty acids esterified to the sugar molecule can be the same or mixed.

The sugar fatty acid esters suitable for use herein can be prepared by a variety of methods known to those skilled in the art. These methods include: transesterification of the sugar with methyl, ethyl or glycerol fatty acid esters using a variety of catalysts; acylation of the sugar with a fatty acid chloride; acylation of the sugar with a fatty acid anhydride; and acylation of the sugar with a fatty acid, per se. As an example, the preparation of sugar fatty acid esters is described in U.S. Patent Nos. 3,963,699 and 4,517,360 (herein incorporated by reference).

A preferred sugar polyester for use in the present invention is a mixture of the hexa-, hepta-, and octa-esters of sucrose and medium-and long-chain fatty acids obtained from edible fats and oils and/or fatty acid sources. Fatty acids with chain lengths of 8 to 22 carbon atoms can be used. This material has: (a) a total content of octa-, hepta-and hexa-esters of not less than 95 percent; (b) an octa-ester content of not less than 70 percent; (c) a content of the penta-and lower esters of not more than 3 percent; (d) a non-Newtonian plastic rheology at 100°F (37.8°C) and in particular having a yield stress of not less than 150 dynes/cm$^2$ and a viscosity of not less than 15 poise at 100°F (37.8°C) after 10 minutes of steady shear at 10 sec$^{-1}$; and (e) a liquid/solid stability of not less than 90 percent at 100°F (37.8°C).

Viscosity and yield stress are known rheological properties and can be measured by use of an instrument such as a plate and cone viscometer (e.g., a Ferranti-Shirley viscometer, manufactured by Ferranti Electric, Inc., 87 Modular Ave., Commack, NY 11725). Additional details are provided below under the Analytical Methods section.

C. Other Frying Medium Ingredients

As discussed above, the frying mediums of the present invention comprise from about 0% to about 65% other frying medium ingredients in addition to the sugar polyesters. These other ingredients can be those typically found in shortenings, fats or oils that are useful for frying.

Any of a variety of edible glyceride-based fat or oil materials can be used in the present invention provided that the solids content is such as to be suitable for use in the present frying mediums. In addition, the fat or oil materials can be processed with one or more of the following processes: hydrogenation, winterization, dewaxing, interesterification, etc.

The fats and oils comprise triglycerides, fatty acids, fatty alcohols, and esters of such acids and alcohols. Especially appropriate for use in the present invention are triglycerides of straight chain or branched chain, saturated or unsaturated, monocarboxylic acids having from 10 to 28 carbon atoms. Suitable sources of such oils are: 1) vegetable fats and oils such as soybean, corn, sunflower, rapeseed, low erucic acid rapeseed, canola, cottonseed, olive, safflower, sesame seed, nasturtium seed, tiger seed, ricebran, wallflower, and mustard seed; 2) meat fats such as tallow or lard; 3) marine oils such as menhaden, pilcherd, sardine, whale or herring; 4) nut fats and oils such as coconut, palm, palm kernel, babassu kernel, or peanut; 5) milkfat, butterfat; 6) cocoa butter and cocoa butter substitutes such as shea, or illipe butter; and 7) synthetic fats.

The preferred fats or oils are edible polymorphic vegetable oils, and mixtures thereof, comprising triglycerides having saturated or unsaturated acyl groups predominately in the range of from 12 to 24 carbon atoms such as lauroyl, lauroleoyl, myristoyl, myristoleoyl, palmitoyl, palmitoleoyl, steroyl, oleoyl, linoleoyl, arachidoyl, arachidonoyl, behenoyl, erucoyl, and the like. Branched chain saturated or unsaturated acyl groups are also useful herein. Nut oils such as palm oil and peanut oil are also preferred.

The other frying medium ingredients can also comprise noncaloric or reduced calorie fats or fat-like materials. These include, but are not limited to, branched chain fatty acid triglycerides, triglycerol ethers, polycarboxylic acid esters, sucrose polyethers, neopentyl alcohol esters, silicone oils/siloxanes, and dicarboxylic acid esters. Other examples include medium chain triglycerides, highly esterified polyglycerol esters, acetin fats, plant sterol esters, polyoxyethylene esters, jojoba esters, mono/diglycerides of fatty acids, and mono/diglycerides of short-chain dibasic acids.

A stabilizer can be employed to help protect against oxidative deterioration at high temperatures. Silicone oils, particularly methyl and ethyl silicones, are useful for this purpose. Methyl silicones have also proven effective in reducing the rate of oil polymerization during deep frying.

Various other additives can be used herein provided that they are edible and aesthetically desirable and do not have any detrimental effects on the frying medium. The frying medium can normally contain minor amounts of optional flavorings, emulsifiers, anti-spattering agents, anti-sticking agents, anti-oxidants, or the like.

D. Foods Fried in the Present Frying Mediums

The present invention also relates to food compositions that have been fried in a frying medium according to the present invention.

Examples of foods that can be fried in the present frying mediums include french fries, doughnuts, fried pies (e.g., turnovers), crullers, fried meats (e.g., pork rind and jerked beef), fried poultry (e.g., chicken and turkey), and fried seafood (e.g., shrimp and fish). Other examples would include fried vegetables, fried grains and foods derived from grains, and fried tofu. Foods that require reheating can be made such as foods that were previously pan fried or deep fried, including fish, meat, potatoes and other vegetables.

The fried foods (or parts thereof, such as potato skins) may be in whole pieces, or sliced, or diced, or shredded, or ground into flour and used by themselves, or with a variety of other food ingredients e.g. flavors, seasonings, sweeteners (including artificial sweeteners), gels, emulsifiers, carbohydrates, bulking agents, liquid crystals, cheeses, vitamins, fibers, browning agents, etc.

The fried food products may be made from doughs that are extruded or sheeted/cut; pieces may be agglomerated; pieces or whole entities may be coated; pieces or whole entities may be layered between other materials such as crackers, wafers, etc. These may further be fried, dried (including freeze dried), baked, microwaved, etc. into their final food form.

Highly preferred food compositions according to the present invention are flavored or unflavored fried snacks. Fried snacks include potato sticks, potato chips (made from fresh or dried potatoes), corn chips, tortilla chips, nacho chips, taco chips, curls, puffs, extruded snack foods, shoestrings, potato skins, and other fried snack products.

## Analytical Methods

### 1. Rheology measurements

#### a. Sample Preparation

The sugar polyester is heated until it completely melts and is thoroughly mixed. Ten grams of the melted sample is weighed into a pre-heated 20 ml. glass vial. The sample is then allowed to recrystallize at 100°F ± 5°F (37.8°C ± 3°C) for 24 hours. After the 24 hour time period has elapsed, the sample is taken to the viscometer and the viscosity is measured.

#### b. Ferranti-Shirley Viscometer Operation Procedure

A Ferranti-Shirley viscometer is used for the viscosity and yield stress measurements of the sugar polyester. A cone is put into place, and the viscometer temperature is adjusted to 100°F (37.8°C). The chart recorder is calibrated, and the gap between the cone and plate is set. The cone speed is checked. and the cone and plate temperatures are equilibrated to 100°F (37.8°C). The panel controls are set. Sufficient sample is placed between the plate and the cone so that the gap is completely filled. The temperature is allowed to stabilize at 100°F (37.8°C) for about 30 seconds, and then the cone rotation and recording are started. A rheogram for the sugar polyester is recorded and analyzed to determine the viscosity and yield stress. Viscosity is measured at 10 seconds$^{-1}$ after 10 minutes of steady shear. Yield stress is measured at zero time and is the stress required to achieve deformational flow.

### 2. Liquid/Solid Stability Measurement

The sugar polyester sample is heated until it completely melts and is thoroughly mixed. The sample is then poured into Beckman #344062 4.4 ml. centrifuge tubes. The tubes are immediately transferred to a 100°F ± 5°F (37.8°C ± 3°C) constant temperature room and allowed to recrystallize undisturbed for 24 hours. The samples are then centrifuges at 60,000 rpm for one hour at 100°F (37.8°C) (the centrifuge and centrifuge head is previously equilibrated at 100°F [37.8°C]). The force on the samples is 486,000 G's. The liquid/solid stability is then calculated as follows:

$$\text{Liquid/Solid Stability} = \frac{(100 \times (\text{total volume of sample} - \text{volume of liquid})}{\text{total volume of sample}}$$

### 3. Method for Measuring Oil Frylife

For purposes of this invention, frylife is defined as the amount of time it takes for the frying medium to darken in color to an absorbance of 1.4 after deep frying foods according to the procedure explained in Example 1. A 5 gram sample of the filtered frying medium is tested in a spectrophotometer for absorbance at a 520 nm wavelength. The absorbance reading is recorded. This absorbance reading depicts the actual frying medium color based on a previously developed correlation of panelist color observations versus spectrophotometer readings at the 520 nm wavelength.

The 1.4 absorbance reading is a darkening color end-point beyond which the frying medium quality is judged to no longer produce acceptable fried foods. Partial frylife days are estimated through linear regression or linear interpolation, both of which are similar and close approximations of the partial frylife days value.

When the frylife of two or more frying mediums are compared, the frying mediums undergo the testing simultaneously, side-by-side, using foods from the same lots to minimize any difference due to variability in the food. The frying mediums are compared by measuring the days it takes each to reach the 1.4 absorbance endpoint.

The following example are intended only to further illustrate the invention and are not intended to limit the scope of the invention which is defined by the claims.

### Example 1

Sucrose polyester is used to fry various foods under conditions typically found in a foodservice establishment. Frying mediums used are:

Sample 1: Sucrose polyester (initially 61.5% octaester)

Sample 2: Sucrose polyester (initially 92.9% octaester)

Fifteen pounds of frying medium are put into a deep frying kettle and heated to 375°F (191°C). A total of 62 batches of food are deep-fried in the frying medium over an 8-hour period during each day for 7 days. The batches consist of the following: french fries, 24 0.25-lb. batches and 8 1-lb. batches; fish, 5 0.25-lb. batches and 5 1-lb. batches; chicken, 11 0.25-lb. batches and 7 1-lb batches; and onion rings, 2 0.25-lb. batches. The frequency of each type of food in the 62 batches approximates their frequency of frying in a typical restaurant. Visual color of the drying medium and fried foods are noted during the day and appropriately recorded.

After frying the 62 batches of food over an 8-hour period, the frying medium in the fry kettle is filtered through a medium porosity cotton filter (pore size: 80 micron diameter; oil flow-through rate: 450 gallons/min./sq.ft.) to remove solid particles accumulated during the day of frying, and then placed back into the fry kettle. Small samples are taken at this time for spectrophotometer absorbance readings and/or chemical analysis.

Sufficient fresh frying medium is added to the fry kettle to replace the frying medium lost due to hydrolysis and/or absorption by the food. The frying medium is topped off to a measured weight of 15 lbs. after each frying day. During each day, the fry kettle is allowed to idle (without food) for approximately 4 hours at the frying temperature.

This process is repeated for 7 days.

Frying medium color and the relative ester distribution of the sucrose polyester are performed. These values are:

|  | Sample 1 | |
| --- | --- | --- |
|  | Day | |
|  | 0 | 7 |
| % Octaester | 61.5 | 58.4 |
| % Heptaester | 33.9 | 30.0 |
| % Hexaester | 2.2 | 6.8 |
| % Penta- & lower esters | 2.4 | 4.8 |

|  | Day | | | |
| --- | --- | --- | --- | --- |
|  | 1 | 3 | 4 | 7 |
| Frying medium absorbance at 520 nm wavelength | 0.187 | 1.273 | 2.365 | 2.728 |

|  | Sample 2 | |
| --- | --- | --- |
|  | Day | |
|  | 0 | 7 |
| % Octaester | 93.6 | 71.4 |
| % Heptaester | 6.3 | 24.2 |
| % Hexaester | 0.1 | 2.1 |
| % Penta- & lower esters | 0.1 | 2.2 |

|  | Day | | | |
| --- | --- | --- | --- | --- |
|  | 1 | 3 | 4 | 7 |
| Frying-medium absorbance at 520 nm wavelength | 0.338 | 0.361 | 0.439 | 0.746 |

Sample 1 frying medium color darkened appreciably faster than Sample 2, reaching the 1.4 absorbance limit within about 3 days frying time. At 7 days the absorbance value for Sample 2 is well below the 1.4 limit; frylife is extrapolated to be about 14 days. Visual observations of the fried foods confirmed that: 1) foods fried beyond 3 days in Sample 1 are of unacceptable eating quality, and 2) foods fried in Sample 2 are of acceptable eating quality for all 7 days.

Example 2

Several sucrose polyester and triglyceride oil blends are used to fry various foods under conditions typically found in a foodservice establishment. Frying mediums used are:

Sample 3: Blend of 50% sucrose polyester (initially 61.5% octaester) and 50% soybean triglyceride oil (107 iodine value)

Sample 4: Blend of 50% sucrose polyester (initially 73.1% octaester) and 50% soybean triglyceride oil (the same oil as in Sample 3)

Sample 5: Blend of 50% sucrose polyester (initially 86.9% octaester) and 50% soybean triglyceride oil (same oil as in Sample 3)

Equipment and conditions for this frying test are identical to those described in Example 1 including type and amount of foods fried, temperature used and heating duration. Samples for spectrophotometer absorbance readings and/or chemical analysis are also performed in the same way.

Frying medium color and the relative ester distribution of the sucrose polyester portion of the frying medium are performed. These values are:

|  | Sample 3 | |
|--|--|--|
|  | Day | |
|  | 0 | 7 |
| % Octaester | 61.5 | 41.1 |
| % Heptaester | 35.9 | 51.1 |
| % Hexaester | 2.6 | 4.7 |
| % Penta- & lower esters | <0.1 | 2.7 |

|  | Day | | | |
|--|--|--|--|--|
|  | 1 | 5 | 6 | 7 |
| Frying medium absorbance at 520 nm wavelength | 0.226 | 1.073 | 1.382 | 1.700 |

|  | Sample 4 | |
|--|--|--|
|  | Day | |
|  | 0 | 7 |
| % Octaester | 73.1 | 53.0 |
| % Heptaester | 25.4 | 43.2 |
| % Hexaester | 1.5 | 1.7 |
| % Penta- & lower esters | <0.1 | 2.2 |

|  | Day | | | |
|--|--|--|--|--|
|  | 1 | 5 | 6 | 7 |
| Frying medium absorbance at 520 nm wavelength | 0.278 | 1.078 | 1.450 | 1.629 |

|  | Sample 5 | |
|--|--|--|
|  | Day | |
|  | 0 | 7 |
| % Octaester | 86.9 | 56.6 |
| % Heptaester | 12.9 | 39.0 |
| % Hexaester | 0.1 | 2.6 |
| % Penta- & lower esters | <0.1 | 1.8 |

|  | Day | | | |
|--|--|--|--|--|
|  | 1 | 5 | 6 | 7 |
| Frying medium absorbance at 520 nm wavelength | 0.260 | 0.905 | 1.098 | 1.305 |

The frylifes for Samples 3 and 4 are about 6 days for these particular blends of sucrose polyester and triglyceride oil. Sample 5 has a frylife projected to be about 7.5 days. Visual observations of the eating quality of the fried foods confirms these frylifes which are based on the absorbance results.

## Example 3

Pringle's-style potato chips are made by forming the chips. then restraining and frying the chips in a frying medium containing sucrose polyester. The chips contain the following ingredients: 64.72% dehydrated potato flakes and granules, 35.14% water, and 0.14% emulsifier. The flakes and granules are first mixed for several seconds in a Cuisinart mixer. The emulsifier is mixed with water, and the mixture is heated to 200°F (93°C), then added to the flakes granules mixture in the Cuisinart. The ingredients are mixed together for two minutes, the sides of the mixer are scraped, and the ingredients are mixed for another three minutes. The mixture is milled to a thickness of 0.020-0.025 inches and chip pieces (dovals) are cut out. The dovals are restrained and fried for 10 seconds at 360°F (182°C) in the frying medium. U.S. Patent 3,576,647 of Liepa, issued October 31, 1967, incorporated by reference herein. describes in detail the method for restraining and frying Pringle's-style potato chips.

The chips are fried in three different frying mediums. The frying mediums contain the following ingredients:

(a) 100% of an intermediate melting fraction sucrose polyester having 12% solids at body temperature and an 83.1% octaester level;

(b) 100% of an intermediate melting fraction sucrose polyester having 30% solids at body temperature and an 85.2% octaester level: and

(c) 100% unhydrogenated cottonseed oil.

The chips are flavored after frying. All the chips are found to taste very acceptable. After storing for two weeks at 90°F (32°C) the chips are still acceptable.

## Claims

1. A method of frying foods comprising immersing said foods in a frying medium comprising:

(a) from about 35% to about 100% sugar fatty acid esters having at least 4 fatty acid ester groups. wherein the sugar contains 4 to 8 hydroxyl groups and wherein each fatty acid group has from about 8 to about 22 carbon atoms, and wherein not less than about 70% of the sugar fatty acid esters are completely esterified; and

(b) from about 0% to about 65% other frying medium ingredients.

2. A method according to Claim 1 wherein more than about 75% of the sugar fatty acid esters are completely esterified.

3. A method according to Claim 2 wherein more than about 80% of the sugar fatty acid esters are completely esterified.

4. A method according to Claim 1 wherein the frying medium comprises from about 50% to about 100% sugar fatty acid esters and from about 0% to about 50% other frying medium ingredients.

5. A method according to Claim 4 wherein the frying medium comprises from about 75% to about 100% sugar fatty acid esters and from about 0% to about 25% other frying medium ingredients.

6. A method according to Claim 5 wherein the frying medium comprises about 100% sugar fatty acid esters.

7. A method according to Claim 1 wherein the sugar is sucrose.

8. A method according to Claim 1 wherein the other frying medium ingredients comprise glyceride oils.

9. Foods fried by the method of Claim 1.

10. A fried food according to Claim 9 comprising a fried snack food.

11. A fried food according to Claim 9 selected from the group consisting of fried chicken, fish. potatoes, and onion rings.

12. A fried food according to Claim 9 wherein the food is deep-fried food.